# EUROPEAN PATENT APPLICATION

(11) **EP 3 361 566 A1**
(43) Date of publication of application: **15.08.2018**
(21) Application number: 16789109.2
(22) Date of filing: 15.03.2016
(51) Int. Cl.: H01Q 1/38, H01Q 23/00, H04W 88/08

(54) **BASE STATION**

(30) Priority: 09.10.2015 CN 201510648781
(71) Applicant: ZTE Corporation, Shenzhen, Guangdong 518057 (CN)
(72) Inventor: ZHOU, Hong, Shenzhen Guangdong 518057 (CN); MU, Xuelu, Shenzhen Guangdong 518057 (CN); TIAN, Shen, Shenzhen Guangdong 518057 (CN); ZHAO, Lijuan, Shenzhen Guangdong 518057 (CN)
(74) Representative: Aipex B.V.
(86) International application number: PCT/CN2016/076420
(87) International publication number: WO 2016/177115

(57) **Abstract**

Provided is a base station. The base station includes: M first modules, which may be radio frequency modules, and M ≥ 1; N second modules, wherein said second modules include at least one of the following: a baseband module, an optical transmission module and a backhaul module, and N ≥ 1; a backplane module, the M first modules and the N second modules being independently arranged on the backplane module; an antenna module; a first radio frequency connector, arranged on the backplane module and arranged to perform radio frequency signal transmission between the first modules and the antenna module; a second radio frequency connector, arranged on the backplane module and arranged to perform signal transmission between the first modules and the second modules. The present disclosure solves the problems in the related art that multiple modules within base stations are integrated together, and that it is not possible to implement the independent expansion of modules within base stations, thereby achieving the effects of implementing the relative independence of modules within a base station, and of implementing the independent expansion of modules within a base station.

## Description

### TECHNICAL FIELD

The present disclosure relates to the communication field, and particularly, to a base station.

### BACKGROUND

Mobile communication of China is currently in a rapidly developing stage and there are more than millions of new users per month. The new users in such great amount definitely cause obvious pressure to the network on capacity expansion. However, as the new users increase sharply, an average mobile communication consumption of the users tends to be decreased. If no measures are taken to change such state, the mobile communication may also be trapped in an embarrassing situation where the users are increased while the income is not increased. Hence, the operators are actively exploring new service markets and striving to develop mobile value-added services, which lead to new requirements on the current network. Compared with other parts, the wireless part, especially the base station system, is a top priority of the whole mobile network construction and particularly requires a new network construction mode.

The base station system undertakes the major tasks in the network construction and occupies a large portion of the network. In the initial stage of the network construction, since there is a relatively small quantity of users, the operator usually just needs to configure a part of the capacity of the base station system. In the middle stage or the later stage of the network construction, the operator needs to continuously expand the capacity of the base station system as market demands continuously increase. In a network deployed by a conventional base station, various kinds of modules are usually integrated together, for example, a baseband unit and a radio frequency unit are usually utilized in cooperation with each other. In a case that the resource for the radio frequency units are insufficient and it is necessary to expand the capacity, not only the radio frequency units need to be increased but also the baseband units need to be increased, which results in unavoidable waste on the baseband part. Hence, there exists a problem in related technology that multiple kinds of modules of the base station are integrated together and consequently a capacity of single kind of modules cannot be expanded independently.

Currently, no effective technical solution has been proposed for the problem in related technology that multiple kinds of modules of the base station are integrated together and consequently a capacity of single kind of modules cannot be expanded independently.

### SUMMARY

The present disclosure provides a base station, to at least solve a problem in related technology that multiple kinds of modules of the base station are integrated together and consequently a capacity of single kind of modules cannot be expanded independently.

According to one aspect of the present disclosure, a base station is provided. The base station includes: M first modules each including a radio frequency module, where M is equal to or greater than 1; N second modules each including at least one of: a baseband module, an optical transmission module and a backhual module, where N is equal to or greater than 1; a backboard module, on which the M first modules and the N second modules are arranged independently from each other; an antenna module; first radio frequency connectors, which are arranged on the backboard module and configured to perform radio frequency signal transmissions between the first modules and the antenna module; and second radio frequency connectors, which are arranged on the backboard module and configured to perform signal transmissions between the first modules and the second modules.

In an exemplary embodiment, the base station further includes first interfaces, which are arranged on the backboard module and configured to connect with one or more of the M first modules that are to be connected to the base station; and second interfaces, which are arranged on the backboard module and configured to be connected with one or more of the N second modules that are be connected to the base station.

In an exemplary embodiment, a quantity of the first interfaces is greater than M; and/or a quantity of the second interfaces is greater than N.

In an exemplary embodiment, the antenna module at least includes a first antenna array and a second antenna array and a quantity of antennas in the first antenna array equals to or differs from a quantity of antennas in the second antenna array.

In an exemplary embodiment, an antenna printed circuit board of the antenna module and the backboard module are integrally formed.

In an exemplary embodiment, a filter of the M first modules is placed between the backboard module and the antenna module.

In an exemplary embodiment, the optical transmission module includes a first external interface, which is configured to connect with at least one of a fiber access baseband processing unit center, a remote radio unit and a base station same as the base station.

In an exemplary embodiment, the backhaul module includes a second external interface configured to connect with a preset antenna to perform radio frequency signal transmitting and receiving. The preset antenna is applied to a narrow beam and configured to perform transmissions in a microwave frequency band.

In an exemplary embodiment, the base station further includes guide pillars and/or guide holes, which are arranged on the backboard module and configured to fix the first modules, the antenna module and the second modules.

In an exemplary embodiment, the base station further includes: a sealing groove, which is arranged at a periphery of at least one of the first modules, the second modules, the backboard module and the antenna module and is configured for the installation of a sealing strip.

A base station is provided in the present disclosure. The base station includes: M first modules each including a radio frequency module, where M is equal to or greater than 1; N second modules each including at least one of: a baseband module, an optical transmission module and a backhual module, where N is equal to or greater than 1; a backboard module, on which the M first modules and the N second modules are arranged independently from each other; an antenna module; a first radio frequency connector, which is arranged on the backboard module and configured to perform radio frequency signal transmissions between the first modules and the antenna module; and a second radio frequency connector, which is arranged on the backboard module and configured to perform signal transmissions between the first modules and the second modules. The problem in related technology that multiple kinds of modules in the base station are integrated and consequently the capacity of single kind of modules cannot be expanded independently is solved, thereby achieving effects that different kinds of modules in the base station are independent from each other and the capacity of single kind of modules in the base station can be expanded independently.

### BRIEF DESCRIPTION OF DRAWINGS

Drawings explained herein are for providing further understanding of the present disclosure. The drawings are a part of the present application. Exemplary embodiments of the present disclosure and descriptions of the exemplary embodiments are intended to explain the present disclosure rather than to limit the present disclosure. In the drawings:
FIG. 1 is a structure diagram of an integrated base station system according to an embodiment of the present disclosure;
FIG. 2 is a schematic diagram of an antenna array according to an embodiment of the present disclosure;
FIG. 3 is a diagram of a first exemplary architecture of an integrated base station system according to an embodiment of the present disclosure;
FIG. 4 is a diagram of a second exemplary architecture of an integrated base station system according to an embodiment of the present disclosure;
FIG. 5 is a first exemplary extended application of an integrated base station system according to an embodiment of the present disclosure;
FIG. 6 is a second exemplary extended application of an integrated base station system according to an embodiment of the present disclosure; and
FIG. 7 is a third exemplary extended application of an integrated base station system according to an embodiment of the present disclosure.

### DETAILED DESCRIPTION

The present disclosure is detailed hereinafter according to embodiments in conjunction with drawings. It should be noted that, embodiments in the present disclosure and features in the embodiments can be combined in case of no confliction.

It should be noted that, terms such as "first" and "second" in the specification, the list of claims and the drawings are for distinguishing similar objects rather than describing a specific order or priority ranking.

A base station is provided according to an embodiment. The base station includes M first modules, M second modules, a backboard module, an antenna module, a first radio frequency connector arranged on the backboard module and a second radio frequency connector arranged on the backboard module. The first module may include a radio frequency module, and M is equal to or greater than 1. The second module includes at least one of a baseband module, an optical transmission module and a backhual module, and N is equal to or greater than 1. The M first modules and the N second modules are arranged on the backboard module independently from each other. The first radio frequency connector is configured to perform radio frequency signal transmissions between the first modules and the antenna module. The second radio frequency connector is configured to perform signal transmissions between the first modules and the second modules. The first modules and the second modules are arranged on the backboard module independently from each other refers to that, the addition or reduction of the first modules is independent from and may not affect the addition or reduction of the second modules. That is to say, the quantity of the first modules can be adjusted arbitrarily and the quantity of the second modules can be adjusted arbitrarily. With the embodiment, a problem in related technology that multiple kinds of modules of the base station are integrated together and consequently a capacity of single kind of modules cannot be expanded independently is solved, thereby achieving effects that different kinds of modules in the base station are independent from each other and the capacity of single kind of modules in the base station can be expanded independently.

The radio frequency module of each of the first modules may include components such as a transceiving link and a filter, to achieve conversion between multi-carrier multi-channel uplink and downlink baseband Inphase and Quadrature (IQ) signals and radio frequency signals, thereby providing transceiving channels for a whole base station system. The baseband module is mainly used to achieve power conversion function, baseband processing function, signaling processing, local and remote operation maintenance function, warning information reporting and operating state monitoring of the base station system, and the like. The antenna module, which realizes conversion between radio signals and radio frequency signals, is used to transmit and receive wireless signals for the base station system. The backboard module realizes signal interconnection between the radio frequency modules and the antenna module via the first radio frequency connector, and further realizes a power source for the radio frequency modules and the baseband module and the signal transmissions between the radio frequency modules and the baseband modules, via the second radio frequency connector.

In the above-described base station, different kinds of modules are independent from each other. For example, according to actual needs, it may be flexibly configured that only radio frequency resources are increased while baseband resources are not increased, i.e., only the radio frequency modules are increased while the baseband modules are not increased. The base station system has an expandable architecture and achieves modularity. The capacity can be expanded by way of block stacking, which facilitates capacity expanding of the base station and achieving higher integration level. Therefore, the base station can be adapted to various application scenarios, the responding speed is high and the construction time is shortened. In addition, types of devices to be maintained are reduced, the complexity of operation and maintenance is decreased, the operation and maintenance cost is saved, and the requirement for multi-scenario applications is meet. A problem in related technology that multiple kinds of modules of the base station are integrated and consequently a capacity of single kind of modules cannot be expanded independently is solved, thereby achieving effects that different kinds of modules in the base station are independent from each other and the capacity of single kind of modules in the base station can be expanded independently.

According to an optional embodiment, the base station further includes a first interface arranged on the backboard module and a second interface arranged on the backboard module. The first interface is configured to connect with the first module that is to be connected to the base station. The second interface is configured to connect with the second module that is to be connected to the base station. Hence, with the reserved first interface and second interface, the capacity of the radio frequency modules and the capacity of the baseband modules can be expanded independently.

According to an optional embodiment, a quantity of the first interface may be greater than M. According to another optional embodiment, a quantity of the second interface may be greater than N. The quantity of the first modules can be expanded by using the first interfaces that are not occupied, and a quantity of the second modules can be expanded by using the second interfaces that are not occupied.

The present disclosure is explained hereinafter based on an exemplary case that the second module is the baseband module.

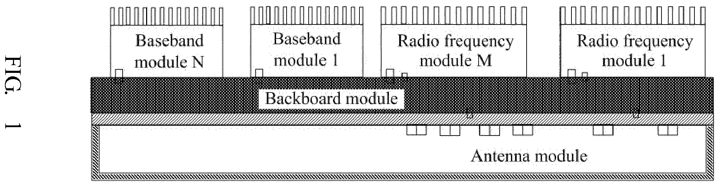

FIG. 1 is a structure diagram of an integrated base station system according to an embodiment of the present disclosure. As shown in FIG. 1, M radio frequency modules in the base station each include components such as a transceiving link and a filter. The transceiving link includes components such as a digital intermediate frequency, a Transmission Receive Unit (TRX) and a low-noise power amplifier, to achieve the conversion between the downlink and uplink baseband IQ signals and the radio frequency signals. The filter achieves selectivity of signals and an implementation way of the filter is not limited specifically.

The M radio frequency modules 11 may independently operate in a Time Division Duplexing (TDD) mode, a Frequency Division Duplexing (FDD) mode, or a TDD/FDD dual mode.

In case of operating in a same mode, the M radio frequency modules 11 may operate in a same frequency band or in different frequency bands.

A specific quantity of the baseband modules 12, i.e., a value of N is determined based on an operating condition of the radio frequency modules 11. In a case that the radio frequency modules 11 operate in different modes and in different frequency bands, multiple baseband modules may be provided, or only one baseband module may be adopted. In a case that only one baseband module is adopted, different interfaces are configured, in a software version, for different modes and different frequency bands.

The antenna module 14 includes an antenna Printed Circuit Board (PCB) 141, an antenna array 142 and an antenna housing 143.

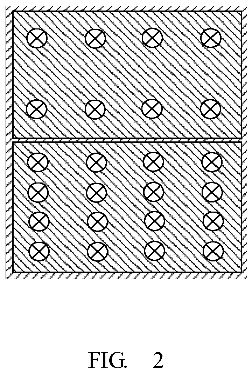

According to an optional embodiment, the antenna array 142 in the antenna module 14 at least includes a first antenna array 21 and a second antenna array 22. FIG. 2 is a schematic diagram of an antenna array according to an embodiment of the present disclosure. A quantity of antennas in the first antenna array and a quantity of antennas in the second antenna array may be the same or may be different. FIG. 2 illustrates an exemplary case that the first antenna array 21 differs from the second antenna array 22, where different antenna arrays can meet different operating requirements.

A specific implementation way of the antenna array 142 is determined based on conditions of the radio frequency modules 11, such as operating modes and operating frequency bands of the radio frequency modules 11. The antenna array 142 may be partitioned into blocks regarding different modes and different frequency bands. Different blocks are in charge of different operating requirements. Quantities and types of antennas in different blocks of the antenna array 142 can be identical or different.

Structure designs of the antenna array 142 of the antenna module 14, such as an arrangement mode and an assembling requirement, may be optimized based on needs of actual application scenarios. A form of the antenna array 142 is not limited specifically as long as a requirement of the base station system can be met.

The antenna PCB 141 of the antenna module 14 includes a feed network and a coupling calibration network. The feed network is used to process signals received by the antenna array and signals transmitted from the antenna array. The feed network may be connected to the coupling calibration network in various effective ways such as using a radio frequency connector or a via-hole, which is not specifically limited herein.

In addition to providing an external field protection for the antenna PCB 141 and the antenna array 142, the antenna housing 143 of the antenna module 14further needs to ensure an air-tightness with respect to the backboard module 13. A sealing groove is arranged at a periphery of the antenna module 14 or at a periphery of the backboard module 13, and a sealing strip is installed in the sealing groove to prevent the rain from entering to cause damage to components of the modules. Requirements on implementation forms and materials of the antenna housing, the sealing groove and the sealing strip are not limited specifically herein.

The first radio frequency connectors 15 on the backboard module 13 are located on a face of the backboard module 13 facing the radio frequency module 11 and a face of the backboard module 13 facing the antenna module 14, and are configured to undertake radio frequency signal transmissions between the radio frequency module 11 and the antenna module 14. The second radio frequency connector 16 is only located at a face of the backboard module 13 facing the radio frequency module 11 and a face facing the backboard module 13, and is configured to serve as a power source for the radio frequency module 11 and the baseband module 12 and undertake baseband signal transmissions between the radio frequency module 11 and the baseband module 12. A baseband signal may include a high-speed differential digital signal, a control signal, a clock signal and so on, and may even include a signal between optical interfaces that may adopt a blind-mating at two sides in the future.

It is also necessary to ensure an air-tightness between the backboard module 13 and the radio frequency module 11 and an air-tightness between the backboard module 13 and the baseband module 12. A sealing groove may be arranged at a periphery of at least one of the backboard module 13, the radio frequency module 11, the baseband module 12 and the antenna module 14, and a sealing strip is to be installed into the sealing groove, thereby preventing the rain from entering to cause damage to components of the modules. Requirements on implementation forms and materials of the sealing groove and the sealing strip are not limited specifically herein.

In a case that one or more of the M radio frequency modules 11 and the N baseband modules 12 are temporarily unused, a sealing cover plate may be installed to ensure the air-tightness of the base station and the protection for the base station, and may be switched into a corresponding module in a subsequent capacity expansion process.

The first radio frequency connector 15 and the second radio frequency connector 16 may be radio frequency connectors having characteristics of blind-mating and radially and axially floating, or may be radio frequency connectors having radio frequency cables and threads, or may adopt any other reliable connection manners having similar functions, which are not detailed herein.

Specific quantities and positions of the first radio frequency connectors 15 and the second radio frequency connectors 16 may be set according to actual needs.

It should be noted that, to facilitate installing the radio frequency modules 11, the baseband modules 12 and the antenna module 14 onto the backboard module 13, the backboard module 13 may be provided with guide pillars and/or guide holes. Those guide pillars and/or guide holes are arranged on the backboard module and are configured to fix the radio frequency modules, the antenna module and the baseband modules. Corresponding positions of the radio frequency modules 11, the baseband modules 12 and the antenna module 14 are provided with guide holes and/or guide pillars. Furthermore, mutual precise positioning between modules may be achieved through the cooperation of the guide pillars and the guide holes. Specific implementation ways of the guide pillars and the guide holes are not limited herein.

To improve heat dissipation of the base station system, the radio frequency modules 11 and the baseband modules 12 are designed with heat dissipation fins 111. Specific shape, interspace and material of the heat dissipation fins are not limited herein.

Operating processes of an uplink receiving and a downlink transmitting in the base station are explained hereinafter with reference to FIG. 1.

The uplink receiving is explained as follows. The antenna array 141 of the antenna module 14 converts a received radio signal into a radio frequency signal. The radio frequency signal, after being processed by the feed network and the coupling and calibration network included in the antenna PCB 141, is transmitted to the radio frequency module 11 via the first radio frequency connector 15 surface-mounted onto the backboard module 13. After the radio frequency module 11 receives the radio frequency signal, the filter-receiving link (low noise amplifier-TRX-digital intermediate frequency) in the radio frequency module 11 up-converts the radio frequency signal into an IQ modulated signal. Then, the IQ modulated signal is transmitted to the baseband module 12 via the second radio frequency connector 16 surface-mounted onto the backboard module 13. In this way, functions such as power conversion function, baseband processing function, signaling processing, local and remote operation maintenance function, monitoring of an operating state of the base station system, and reporting of warning information can be achieved.

The downlink transmitting is explained as follows. The IQ modulated signal at the baseband module 12 is transmitted to the radio frequency module 11 via the second radio frequency connector 16 surface-mounted onto the backboard module 13. After the radio frequency module 11 receives the IQ modulated signal, the transmitting link (digital intermediate frequency-TRX-power amplifier)-filter in the radio frequency module 11 down-converts the Q modulated signal into the radio frequency signal. Then, the radio frequency signal is transmitted to the antenna module 14 via the first radio frequency connector 15 surface-mounted onto the backboard module 13. The radio frequency signal, after being processed by the feed network and the coupling and calibration network included in the antenna PCB 141, is received by the antenna array 141 of the antenna module 14 and converted by the antenna array into the radio signal, and then the radio signal is transmitted.

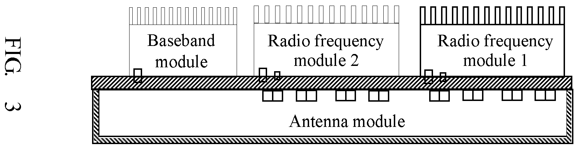

FIG. 3 is a diagram of a first exemplary architecture of an integrated base station system according to an embodiment of the present disclosure. According to the embodiment, the backboard module and the antenna PCB of the antenna module may be integrally together to form an integral structure. FIG. 3 schematically illustrates two radio frequency modules 11, one baseband module 12, one backboard module 13 and one antenna module 14. However, quantities of the radio frequency module 11 and the baseband module 12 are not limited specifically and can be set according to needs of actual application scenarios.

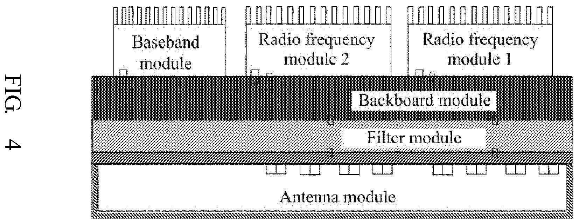

FIG. 4 is a diagram of a second exemplary architecture of an integrated base station system according to an embodiment of the present disclosure. In some particular application scenarios in which out of band interference is close to a frequency band of the base station and the out of band interference strongly suppressed, filters in the M radio frequency modules are separated out and placed between the backboard module and the antenna module as a separate filter module 31, to enlarge a chamber space and achieve the strong suppression, and further support the backboard module and the antenna module and enhance the reliability of the base station system under a wind load. In an exemplary embodiment, the filters may be placed between the radio frequency modules and the backboard module, which is not limited specifically herein.

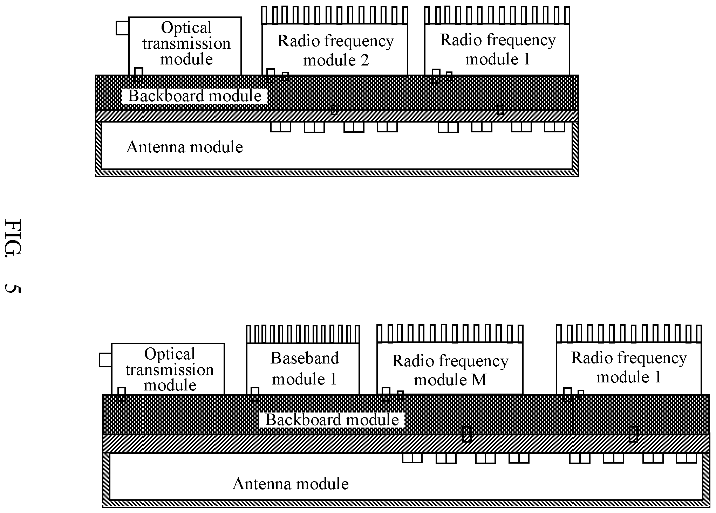

FIG. 5 shows a first exemplary extended application of an integrated base station system according to an embodiment of the present disclosure. According to the embodiment, the baseband module may be replaced by an optical transmission module 41 as shown in a left part of FIG. 5. In an exemplary embodiment, as shown in a right part of FIG. 5, the base station may be provided with both the baseband module and the optical transmission module. The optical transmission module 41 needs to be equipped with a power source to perform a normal service. The optical transmission module 41 may be arranged on the backboard module. The optical transmission module 41 may further include a first external interface that is configured to connect with at least one of a fiber access baseband processing unit center, a remote radio unit and a base station same as the above-described base station. That is to say, the above-described integrated base station system can be cascaded with other remote radio units and integrated base station systems same as the above-described integrated base station system. Such extended application may achieve cascading multiple remote radio units of different modes at an identical base station, which is applicable to continuous capacity expansion of the base station system performed by the operators according to continuously increased market demands.

The right part of FIG. 5 illustrates a case where the baseband module is remained and an expansion port is configured to arrange an optical transmission module. Here, the optical transmission module has an identical function to the optical transmission module in FIG. 5a.

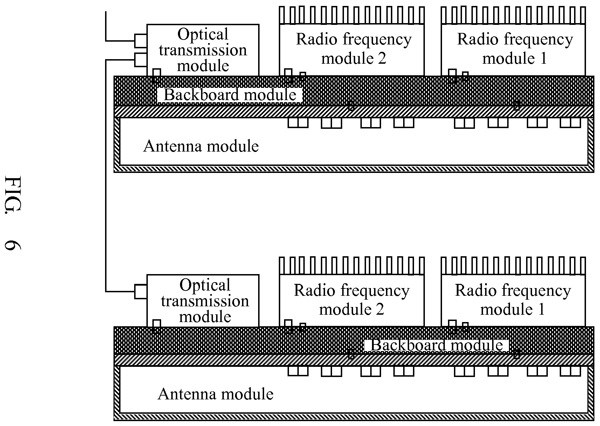

FIG. 6 is a second exemplary extended application of an integrated base station system according to an embodiment of the present disclosure. In the embodiment, two remote radio units are cascade, and there are two external interfaces 411. A quantity of cascaded remote radio units may be increased specifically, which is not detailed herein.

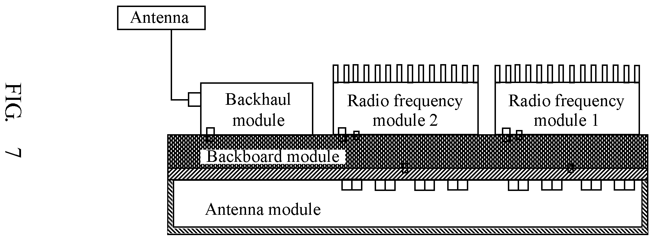

FIG. 7 is a third exemplary extended application of an integrated base station system according to an embodiment of the present disclosure. According to the embodiment, the baseband module may be replaced by a Backhaul module 61. In an exemplary embodiment, similar to what is shown in the right part of FIG. 5, the base station may be provided with both the baseband module and the Backhaul module. The Backhaul module needs to be equipped with a power source. The Backhaul module 61 may be arranged on the backboard module. The Backhaul module may include a second external interface that is configured to be connected with an antenna to perform rapid signal transmitting and receiving. In an exemplary embodiment, the baseband module may be replaced by a Backhaul and power module 61, here the Backhaul is also referred as a signal tunnel. The Backhaul and power module 61 includes a external interface 611 that directly connects with a preset antenna corresponding to an antenna shown in FIG. 7 to perform the rapid signal transmitting and receiving. Such extended application has a similar function to a relay station, and the integrated base station system can capture a weak signal, amplify the captured signal and transmit the amplified signal. In this way, a user of a low power consumption may keep contact with other user at a place where is unable to directly contact with the other user. Such extended application may be applied to remote mountainous regions and sparsely populated places with low coverage of base stations, or may be used to rapidly cover some coverage holes existing in a current base station network at little cost. The preset antenna may provide no beam-forming and may be applied to a narrow beam application. The preset antenna may be configured to perform transmissions only in a microwave frequency band and to achieve point-to-point transmissions.

According to an optional embodiment, in a case where the baseband module is remained, the expansion port may be used for arranging a Backhaul module. Here, the Backhaul module has a same function to the Backhaul module in FIG. 7.

It should be noted that, the above modules may be implemented through software or hardware. Implementation through hardware may include but is not limited to the following ways: all the modules are located in a same processor, or the modules are located in multiple processors respectively.

With the integrated base station system provided according to the embodiments of the present disclosure, modules can be classified into the radio frequency module, the baseband module (or the optical transmission module and/or the backhaul module), the antenna module and the backboard module according to different functions, and the radio frequency module, the baseband module and the antenna module can be installed on the backboard module through, for example, blind-mating radio frequency connectors and so on. Compared with related technology, the modules are independent from each other and no feeder connection is required, which facilitates installation and future maintenance and reduces operating costs for operators. Quantities of respective kinds of modules can be set flexibly according to various application scenarios, thereby improving flexibility in networking and saving antenna roof space. General development trend for future base station is to achieve lower cost, more flexible architecture, higher performance and higher integration level, and the form of the base station product may be developed to adapt to various complicated wireless environments.

Apparently, it should be understood by the skilled in the art, the above modules or steps described in the present disclosure may be implemented using a general-purpose computing device. Those modules or steps may be integrated on a single computing device or may be distributed on a network formed by multiple computing devices. In an exemplary embodiment, those modules or steps may be implemented using program codes that are executable by a computing device, such that the program codes may be stored in a memory device and executed by the computing device. In addition, in some cases, the illustrated or described steps may be performed in an order different from that disclosed herein. Those modules or steps may be made into integrated circuit modules respectively, or multiple modules or steps in those modules or steps may be implemented by being made into a single integrated circuit module. Hence, the present disclosure is not limited to any particular combination of hardware and software.

The above-described embodiments are merely preferred embodiments of the present disclosure, so they are not intended to limit the present disclosure. Various modifications and changes can be made to the present disclosure by those skilled in the art. Any modifications, equivalent replacements and improvements made without departing from the spirit and principle of the present disclosure shall all fall within the protection scope of the present disclosure.

### INDUSTRIAL APPLICABILITY

In view of the above, the base station provided in the embodiments of the present disclosure has the following beneficial effects. A problem in related technology that multiple kinds of modules in a base station are integrated together and consequently a capacity of single kind of modules cannot be expanded independently is solved, thereby achieving effects that different kinds of modules in the base station are independent from each other and the capacity of single kind of modules in the base station can be expanded independently.

## Claims

1. Abase station, comprising:
M first modules each comprising a radio frequency module, wherein M is equal to or greater than 1;
N second modules each comprising at least one of: a baseband module, an optical transmission module and a backhual module, wherein N is equal to or greater than 1;
a backboard module, wherein the M first modules and the N second modules are arranged on the backboard module independently from each other;
an antenna module;
first radio frequency connectors, arranged on the backboard module and configured to perform radio frequency signal transmissions between the first modules and the antenna module; and
second radio frequency connectors, arranged on the backboard module and configured to perform signal transmissions between the first modules and the second modules.

2. The base station according to claim 1, further comprising:
first interfaces, arranged on the backboard module and configured to connect with one or more of the M first modules that are to be connected to the base station; and
second interfaces, arranged on the backboard module and configured to connect with one or more of the N second modules that are to be connected to the base station.

3. The base station according to claim 2, wherein a quantity of the first interfaces is greater than M; and/or a quantity of the second interfaces is greater than N.

4. The base station according to claim 1, wherein the antenna module at least comprises a first antenna array and a second antenna array; and
wherein a quantity of antennas in the first antenna array equals to or differs from a quantity of antennas in the second antenna array.

5. The base station according to claim 1, wherein an antenna printed circuit board of the antenna module and the backboard module are integrally formed.

6. The base station according to claim 1, wherein a filter of the M first modules is placed between the backboard module and the antenna module.

7. The base station according to claim 1, wherein the optical transmission module comprises: a first external interface, configured to connect with at least one of a fiber access baseband processing unit center, a remote radio unit and a base station same as the base station.

8. The base station according to claim 1, wherein the backhaul module comprises a second external interface configured to connect with a preset antenna to perform radio frequency signal transmitting and receiving; and
wherein the preset antenna is applied to a narrow beam and configured to perform transmissions in a microwave frequency band.

9. The base station according to claim 1, further comprising:
guide pillars and/or guide holes, which are arranged on the backboard module and configured to fix the first modules, the antenna module and the second modules.

10. The base station according to claim 1, further comprising:
a sealing groove, which is arranged at a periphery of at least one of the first modules, the second modules, the backboard module and the antenna module and is configured to install a sealing strip.
